# EUROPEAN PATENT SPECIFICATION

(11) **EP 1 183 445 B1**
(45) Date of publication and mention of the grant of the patent: **15.12.2004**
(21) Application number: 00939250.7
(22) Date of filing: 06.06.2000
(51) Int. Cl.: F01M 13/00, F02M 25/06, F02F 1/00, F02F 3/00

(54) **INTERNAL COMBUSTION ENGINE**
BRENNKRAFTMASCHINE
MOTEUR A COMBUSTION INTERNE

(30) Priority: 07.06.1999 SE 9902113
(43) Date of publication of application: 06.03.2002
(73) Proprietor: Volvo Personvagnar AB, 405 08 Göteborg (SE)
(72) Inventor: MARCIL, Jean-Pierre, Québec J6N 1P2 (CA)
(74) Representative: Hellbom, Lars Olof
(86) International application number: PCT/SE2000/001166
(87) International publication number: WO 2000/077351

(56) References cited:
- US-A- 3 667 443
- US-A- 4 191 150
- US-A- 4 363 310
- US-A- 5 460 147

## Description

The present invention relates to an internal combustion engine, comprising a cylinder block with at least one cylinder barrel, a cylinder head with at least one inlet channel and exhaust channel with associated inlet and output valves for a combustion chamber situated above a piston moveable in the cylinder barrel and situated below the piston a crank case for lubricating oil, wherein the piston is shaped with at least two peripheral grooves situated at a distance from each other, each having its own piston ring and a piston collection chamber contained between the rings (Compare with US-A-4 191 150.)

It is a known fact that it is not possible to provide piston ring sealing between the pistons and the surrounding cylinder walls in an internal combustion engine which 100% seals off the combustion chambers from the crank case of the engine. A certain small quantity of combustion gases, here called blow-by, therefore always flows past the piston ring and down into the crankcase of the engine. In order that a too high overpressure partially caused by the blow-by gases will not occur in the crankcase the crankcase must be ventilated and the more effective the ventilation is then the lower the overpressure in the crank case is and therefore the lower the engine pumping losses become. On the other hand, if the crankcase pressure is further reduced, oil consumption can increase as oil vapour carried by the blow-by is evacuated by the positive crankcase ventilation system.

In modem engines closed crankcase ventilation is used in order to make the environmental effects as small as possible. Normally, the blow-by gases and water vapour present are allowed to enter the crankcase, where they are mixed vigorously with and become trapped within the oil droplets in suspension in the crankcase, and are afterwards led out from the crankcase via a hose to the inlet manifold of the engine before the throttle, were it is mixed with the intake air. In order to separate oil out of the oil mist which is unavoidably mixed with the blow-by gases, different types of filters and oil traps are used in the crankcase ventilation. All hitherto known crankcase ventilation systems have in common that they must separate oil from blow-by after they have been mixed together. Also, it has not been possible to minimise a certain overpressure in the crankcase, which pressure increases with power demand unless a pressure regulator is added.

It is an object of the invention to avoid this mixing of blow-by and oil. This is achieved by evacuating the unburnt blow-by mixture and combustion gases directly into an expansion chamber via an evacuation port in the cylinder wall, instead of letting them expand in the crankcase. Therefore the gases do not mix intimately with the oil which facilitates separation and the oil trap operation. When expanding the gases lose much of the flow rate energy which could otherwise allow them to carry and mix with oil droplets present in or near the evacuation port.

Even with a pressure regulator fitted, known engines will have a much higher pressure in the crankcase than in the combustion chamber during intake stroke, which pressure will attempt to press the oil film on the cylinder wall and the oil mist in the crankcase past the oil scraper ring of the piston and into the combustion chamber of the engine. In order to prevent to the greatest possible extent the oil flow to the combustion chamber the ring tension must be high for the oil scraper ring and the oil scraper ring is therefore the component which alone causes the greatest internal friction in the engine. The oil which even so unavoidably penetrates into the combustion chamber of the engine does not just cause pollution in the engine exhaust gases with consequential strain on the catalyzer. It also lowers the octane number of the fuel which in modern engines with knock sensors and automatic ignition advance leads to a retarding of the ignition with consequential increased fuel consumption. Last but not least the oil consumption of the engine itself and the costs of replacing used oil are directly dependent on how much oil penetrates into the combustion chamber because of the pressure difference between the crank case and the cylinder space above the piston.

The combustion of the oil also contributes to deposits in and around the piston rings, which deposits can interfere with the proper operation of the rings and may eventually immobilize the rings, with a corresponding deterioration of their function.

Therefore it has been an object to produce an engine in which the difference between the pressure in the crankcase of the engine and the pressure in its air intake is maintained as low as possible, that is, the pressure difference which strives to press the lubricating oil past the piston rings and into the combustion chamber during the intake stroke of the engine during all operating conditions is lower than in known engines, in order to minimize the oil consumption as well as the pumping, windage and friction losses. The solution according to the invention eliminates the need for the condensing effect of a colder oil trap to recuperate oil and also prevents the system from freezing.

This has been achieved by virtue of the fact that the cylinder block has been designed with an evacuation port for each cylinder, said channel opening into the cylinder barrel and forming a communicating connection between the cylinder barrel and the intake channel preferably in close proximity to an engine coolant passage. The outlet of the evacuation channel and the piston are so adapted to each other that the piston holds the evacuation channel open in order to maintain the connection between the crank case and the intake channel during the movement of the piston from its top dead centre to a position at a predetermined distance from top dead centre (TDC) and to thereafter break the connection of the evacuation channel with the crank case by its continued movement down to bottom dead centre. Also, the cylinder outlet port of the evacuation channel is adapted to provide communication with the piston collection chamber during the movement of the piston from its top dead centre to a position at a predetermined distance from TDC.

However, since the pressure in the crank case of previously known engines is relatively high and the volume and the rate of blow-by gases intended to flow into the evacuation channel is relatively high the flow resistance in the evacuation channel becomes relatively high.

An oil trap is arranged in the evacuation channel to prevent oil particles in the blow-by gases flowing into the evacuation channel from reaching the intake channel and burning in the combustion chamber. However, since the flow rate of the blow-by gases in the evacuation channel is relatively high it is difficult to prevent all oil particles from reaching the inlet channel.

The objective problem to be solved by the present invention is therefore to produce an engine of the type mentioned in the introduction in which the pressure pulses and the flow rate of blow-by gases in the evacuation channel is lower than in previously known engines in order to minimize the flow velocity of the blow-by gases and to prevent oil particles from reaching the inlet channel, while evacuating blow-by to the air inlet.

This is achieved according to the invention by virtue of the fact that the engine has an expansion chamber commonly connected to each cylinder via an individual evacuation port, said port opening out into the respective cylinder barrel, the expansion chamber forming a communicating connection between the cylinder barrel and the inlet channel via the evacuation port and an evacuation channel, said evacuation channel opening out into at least one inlet channel or inlet manifold, and that the evacuation port and the piston are so adapted to each other that the piston holds the evacuation port open in order to maintain the connection between the crank case and the inlet channel during the piston's movement from its top dead centre to a position at a predetermined distance from the top dead centre and thereafter breaks the connection of the evacuation port with the crank case during its continued movement down to bottom dead centre, and that the collection chamber is connected to the evacuation port when the piston is near the bottom dead centre.

This allows better pressure equalisation between the inlet channel or manifold and the crankcase, while providing necessary communication and reducing the amount of oil splashes which could reach the port.

By providing a chamber of large cross section arranged between the evacuation port in the cylinder barrel and the inlet channel the blow-by gases coming from the evacuation port can expand, reduce the pressure pulse magnitude and slow down to a less turbulent state, thereby allowing more oil particles to settle and be trapped. This expansion chamber is also provided with means permitting the oil to return to the crankcase from a less turbulent area of the chamber.

In a preferred embodiment, a cyclone tube is arranged in the expansion chamber, in proximity to the evacuation ports. The cyclone tube, which can be double open ended, causes the blow-by gases to circulate, so that oil particles in the blow-by is forced into contact with a surface by centrifugal force. Also, baffles can be arranged in the expansion chamber to further increase the contact area for the oil to cling to, and to reduce the pressure and speed of the circulating blow-by gas. By maintaining a negative pressure, water vapour will vapourise easily while oil droplets will cling to the cyclone surface due to its higher viscosity.

The piston is in its basic construction a conventional cylindrical piston which according to the invention, on the side which is facing towards the opening of the evacuation port can be provided with a shield which forms a screening-off towards the opening of the evacuation port in order to limit the intrusion of oil splashes. The screen has a greater clearance towards the cylinder barrel wall than the piston cylinder so that the crank case, via the gap formed through the greater clearance, and the evacuation port are joined with the inlet channel, via the expansion chamber and the evacuation channel during a predetermined part of the path of movement of the piston.

Preferably, each piston has a collection chamber between the piston ring grooves for unburnt fuel-air mixture and combustion gases which pass the upper piston ring, and the cylinder has an evacuation port so orientated in relation to the collecting chamber that, after a predetermined movement of the piston from its top or bottom dead centre portion a communicating connection is established between the piston collection chamber and the inlet channel via the evacuation channel and the expansion chamber. In this way, unburnt fuel-air mixture and combustion gases are prevented from reaching the crankcase. Instead they are ventilated out directly through the evacuation channel into the expansion chamber and flow to the inlet channel because an overpressure occurs in the collection chamber, while an underpressure occurs in the cylinder evacuation channel. Unburnt fuel-air mixture trapped under the first piston ring would otherwise flow back into the combustion chamber during the expansion stroke as soon as the cylinder pressure fell below the pressure of the mixture but this would occur too late for the mixture to be able to be burnt. To obtain a reduction of pressure of the volume of unburnt fuel-air mixture and combustion gases taken up in the collection chamber, the piston can be provided with a space, such as plurality of bores, communicating with the collection chamber. Hereby the total volume of the collection chamber is thereby increased, leading to a reduction in the pressure of the gases taken up in the collection chamber.

The invention is described more closely with reference to the embodiments shown on the accompanying drawings, where Fig. 1 shows a cross section through a cylinder block of a first embodiment of an engine according to the invention, Fig. 2 shows a cross section through a cylinder head of the first embodiment of an engine according to the invention, Fig. 3 shows a detail view of piston ring grooves and a collection chamber of a piston, Fig. 4 shows a schematic representation of a cross section through a second embodiment of an engine according to the invention, Fig. 5 shows a third embodiment of an engine according to the invention, and Fig. 6 shows a perspective view of a cylinder block of one embodiment of an engine according to the invention.

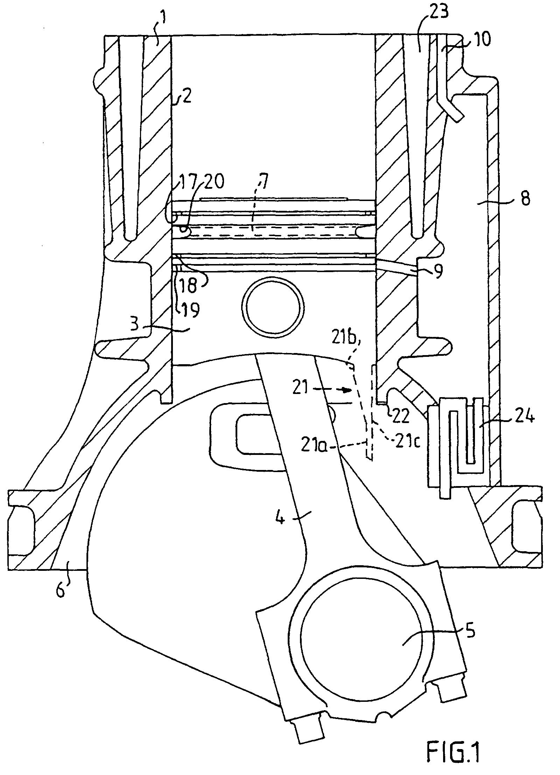

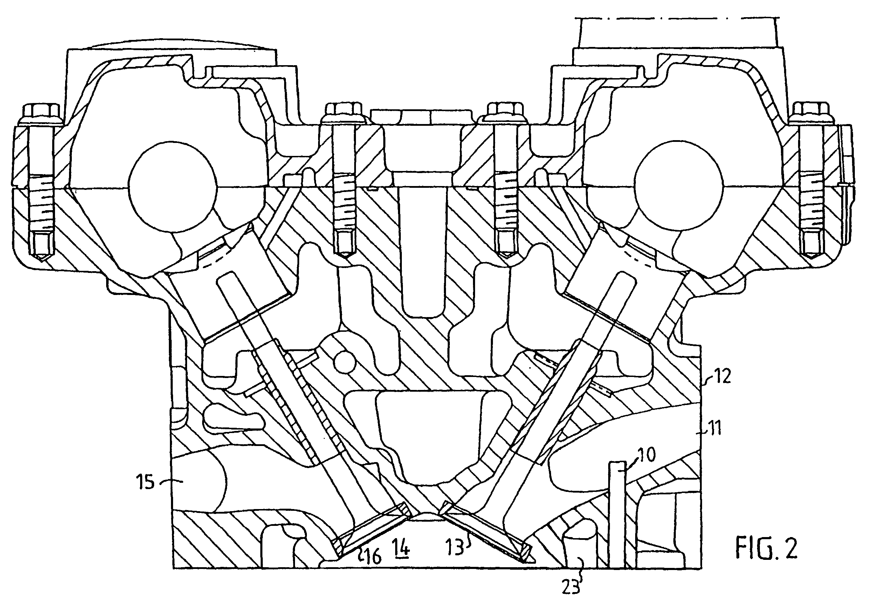

In Fig. 1 the reference number 1 denotes a cylinder block and the reference number 2 a cylinder barrel in which a piston 3 is displaceably mounted. The piston 3 is via a connecting rod 4 connected with a crank shaft 5 which is mounted rotatably in the crank case 6 of the cylinder block 1. A lower frame bearing bridge and an oil pan which together close the crank case are omitted from Fig. 1. In the cylinder block 1 is an evacuation port 9 arranged. The port 9 opens out into an expansion chamber 8 arranged on the outside of, preferably adjacent to, the engine block 1. Each port 9 can include one or more orifices (not shown) in order to provide sufficient flow area for the blow-by gases. An evacuation channel 10 opens out from the expansion chamber 8 into an inlet channel 11 in the cylinder head 12 of the engine (see Fig. 2). As is evident from Fig. 2, the evacuation channel opens out into the inlet channel 11 relatively close to the inlet valve 13 in the combustion chamber 14. In the combustion chamber 14 there also opens out an exhaust channel 15 with an exhaust valve 16.

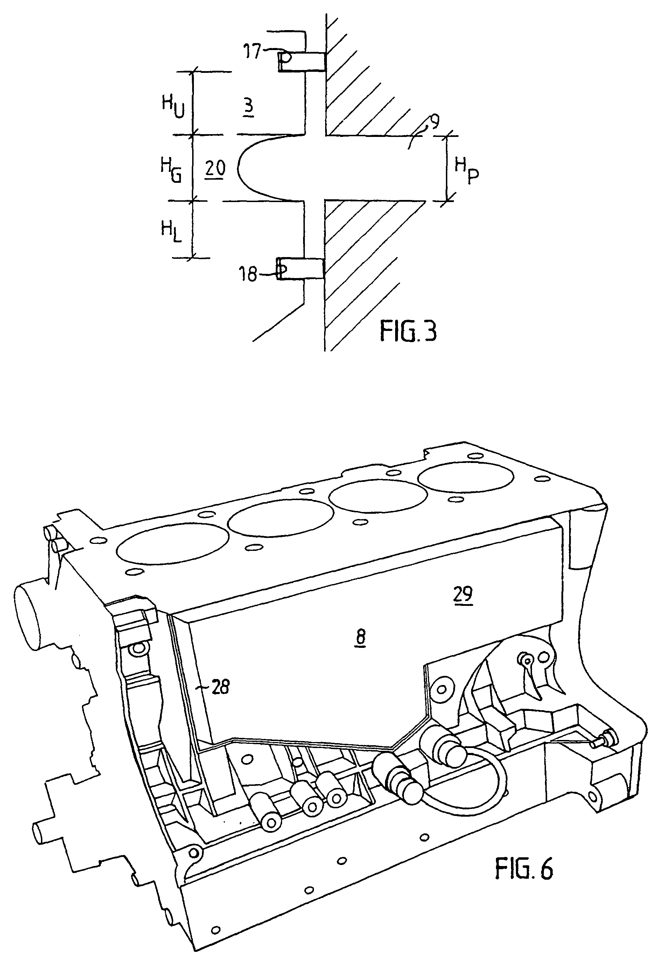

The piston 3 has a first and a second piston ring groove 17 and 18, respectively, for a first and second compression ring (not shown) and a third piston ring groove 19 for an oil scraper or control ring. In the part of the piston between the piston ring grooves 17 and 18 there is a collection chamber 20, in the form of a groove, the width and depth of which may be considerably greater than the width and depth of the piston ring groove. This is disclosed in Fig. 3.

In order to optimize the time-area (the duration during which the port 9 is communicating with the collection chamber 20 and the cross-section of the evacuation port 9) and to reduce the piston deck height (the distance between the top of the piston and the wrist pin axis 3a), the height H_{P} of the port 9 should be smaller than, or preferably equal to, the height H_{G} of the collection chamber groove 20. This will allow maximum flow capacity with the minimum piston deck height, At the same time, the distance H_{U} between the lower edge of the first, upper compression ring 17 and the upper edge of the collection chamber groove 20 must be equal or larger than the height H_{P} of the port 9. This will maximise the duration and the timing of the gas flow between the collection chamber 20 and the port , while minimising the deck height, as the dwell of the piston is relatively long near the BDC.

Similarly the distance H_{L} between the upper edge of the second, lower compression ring 18 and the lower edge of the collection chamber groove 20, must also be equal to or larger than the height H_{P} of the port 9. This is necessary in order to prevent blow-by from entering the crankcase, and is achieved by avoiding communication between the collection chamber 20 and the crankcase 6 when the port 9 is overlapping the second compression ring 18.

The height H_{G} of the collection chamber groove 20 must be equal to or smaller than either of the heights H_{U} or H_{L} between the upper or lower compression rings 17,18 and the upper or lower edges of the collection chamber groove respectively. Also, the lower edge of the first compression ring 17 must always be level with or above the upper edge of the port 9 at BDC, to prevent the flow of gas under pressure from the combustion chamber into the port 9, through the expansion chamber 8 and into the crankcase 6.

In a preferred embodiment, the heights H_{G} , H_{U} and H_{L} are equal, or near equal within the parameters stated above.

In a further embodiment the piston 3 can be designed with a shield 21 on the side which is facing towards the opening of the evacuation port 9. The axial extent of the shield 21 is approximately the same as the length of the piston 3 from the lower edge of the oil scraper groove to the lower edge of the piston. The smallest width of the shield 21 at the lower part 21a is approximately four times the diameter of the evacuation port 9. The width of the lower part may be chosen up to the greatest width of the upper part 21b, which may be up to approximately one sixth of the circumference of the piston. As is evident from Fig. 1 the shield is so arranged in relation to the piston that a gap 22 is formed between the wall of the cylinder barrel 2 and the shield wall 21 c. The width of the gap 22 should be approximately a fourth of the diameter of the opening of the evacuation port 9. However, the sizes should be chosen so that this gap 22 in combination with a stepped shield 21 are dimensioned so as to give the crank case vapour constricted passage into the evacuation port 9, as well as limiting oil splashes from reaching the evacuation port 9. When forming the shield 21 with a step there will be an upper portion with a small clearance between the shield surface and the cylinder wall and a lower portion with a larger clearance.

The piston 3 with the shield 21 functions as a moving valve element which connects the crank case 6 with the expansion chamber 8 and thereby the inlet channel 11 from the top dead centre of the piston 3 and approximately a half effective piston stroke. In this way the pressure difference between the crank case 6 and the inlet channel is reduced. Closing of the evacuation port causes a reduction of the inner cyclic pressure pulse effect in the crank case which otherwise would lead to an increased oil transfer through carry-over of oil in suspension to the expansion chamber 8. The relatively low pressure in the crank case 6 with a low and medium throttle opening also leads to reducing the negative effects of these inner pressure pulses which makes it possible to dimension the engine with a small crank case volume, even under heavy load.

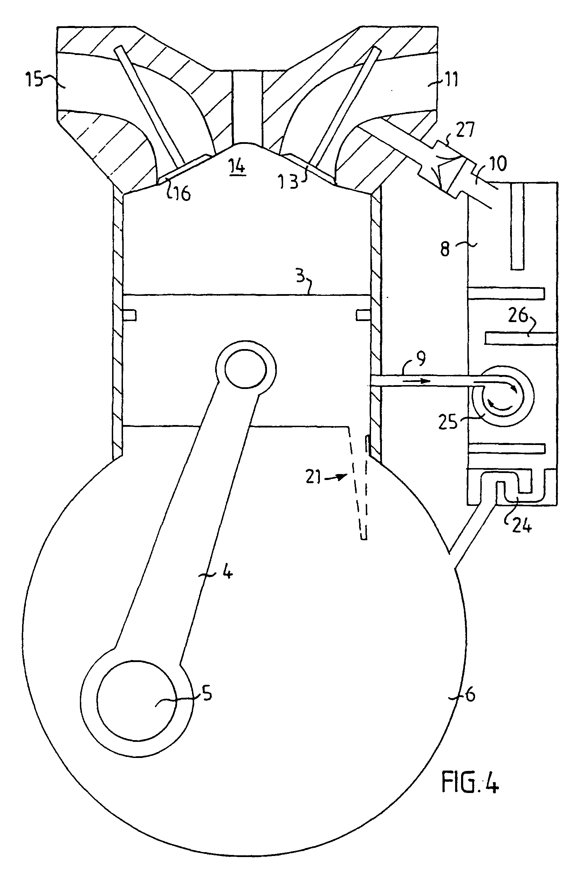

The expansion chamber 8, evacuation port 9 and evacuation channel 10 are prewarmed continuously by the cooling fluid in the adjacent cooling jacket 23 which eliminates the requirement of expensive heated pipes or tubes. This reduces the costs and the risk for freezing at extremely low temperatures. Oil from the oil scraper ring is prevented from being sucked into the inlet channel 11 via the evacuation port 9 through practically the same underpressure existing in the crank case under the piston as in the inlet channel 11. As a result of this, the tension in the oil scraper ring can be reduced, which reduces friction between the piston and the cylinder. Oil in the oil mist which reaches the evacuation port 9 is separated out by means of the expansion chamber 8, as will be described in more detail according to a second embodiment in Fig. 4.

Blow-by gases which during the early expansion stroke of the piston 3 stream past the first compression ring in the groove 17 are retained in the collection chamber formed by the collection chamber 20 and the bore 7. When the piston 3 has completed the main part of the expansion stroke the collection chamber 20 and the bore are connected with the evacuation port 9. Blow-by gases under pressure can now expand and be evacuated to the inlet channel 11 via the evacuation port 9, the expansion chamber 6 and the evacuation channel 10. No further air or gas is used to push out the blow-by gas but the gas and some oil is evacuated through its own pressure. When the piston 3 after having passed the bottom dead centre moves upwards during the exhaust stroke, any possible remaining quantity of gas is evacuated as the collection chamber 20 is still connected with the evacuation port 9 at the piston's 3 initial movement upwards. If blow-by gas should still remain in the collection chamber 20 during the final part of the exhaust stroke and the main part of the inlet stroke, this quantity of gas can be evacuated to the inlet channel 11 when the collection chamber 20 and port 9 are again joined to each other.

Thus, during all working strokes the collection chamber 20 and the bore at times are connected with the evacuation port 9 which ensures that the collection chamber 20 and the bore 7 are properly emptied of vapour and/or at the beginning of each expansion stroke. This is important for keeping the collection chamber 20 clean and free of residue.

The part of the HC emission which must be neutralized in a conventional engine's catalyzer is caused by the quantity of unburnt fuel-air mixture which is pressed past the first compression ring during the compression stroke and trapped between the compression rings. This mixture normally flows back to the combustion chamber 14, so-called reverse blow-by, when the pressure there during the expansion stroke is less than the pressure in the mixture between the rings. However, this fuel-air mixture can be accumulated and comes back to the combustion chamber 14 too late for burning and for contributing to the output of the engine. With the help of the evacuation port 9 the unburnt fuel-air mixture can be evacuated from the collection chamber 20 before the pressure in the combustion chamber becomes so low that the mixture can flow past the first piston ring and back into the combustion chamber 14. Said mixture can therefore be burned in the next power stroke, instead of being sucked out with the exhaust or drawn into the crankcase.

According to the first embodiment in Fig. 1 the expansion chamber 8 in its lowermost portion is provided with a vapour separator 24 which connects the expansion chamber 8 with the crank case 6. The volume of the expansion chamber 8 allows the blow-by gases to expand and slow down to a calm condition in the expansion chamber 8, thus allowing oil to be trapped. Oil particles in the expansion chamber 8 flow by gravity down to the lowermost portion. When the oil reaches the vapour separator 24, the oil returns to the crank case 6. The vapour separator 24 is situated in a less turbulent area of the expansion chamber 8. This will make it easy for the oil to pass the vapour separator 24 without being disturbed by the blow-by gases in the expansion chamber 8. The evacuation channel 10 is preferably arranged in the uppermost portion of the expansion chamber 8. In this way the blow-by gases have to pass a relatively long distance through an area heated by the engine in the expansion chamber 8 before they reach the evacuation channel 10, so that the blow-by gases are allowed to expand and slow down as mentioned above. Because the gases flow through a heated area, the water vapour in the blow-by is prevented from freezing.

In a second embodiment shown in Fig. 4, a cyclone tube 25 is arranged into the expansion chamber 8. The cyclone tube 25 makes the blow-by gases to circulate, so that oil particles in the blow-by gases are made to cling to surfaces in the cyclone by the centrifugal force of the gas. Baffles can be arranged in the expansion chamber 8 in order to further increase the contact surface in the chamber, as well as reduce the speed of the circulating oil droplets in the blow-by gases. A one-way check valve 27, such as a reed valve, is arranged in the evacuation channel 10. The check valve 27 prevents a pressure build-up in the air intake to propagate into the expansion chamber during sudden acceleration or transient throttle application. In such cases, the check valve 27 will remain closed until the pressure in the expansion chamber 8 exceeds the pressure in the air intake. Hence a sudden loss of underpressure in the expansion chamber 8 is avoided, and although the pressure in the chamber will begin to rise under such conditions, the delay is sufficient to ensure proper operation of the system until the next opening of the check valve 27.

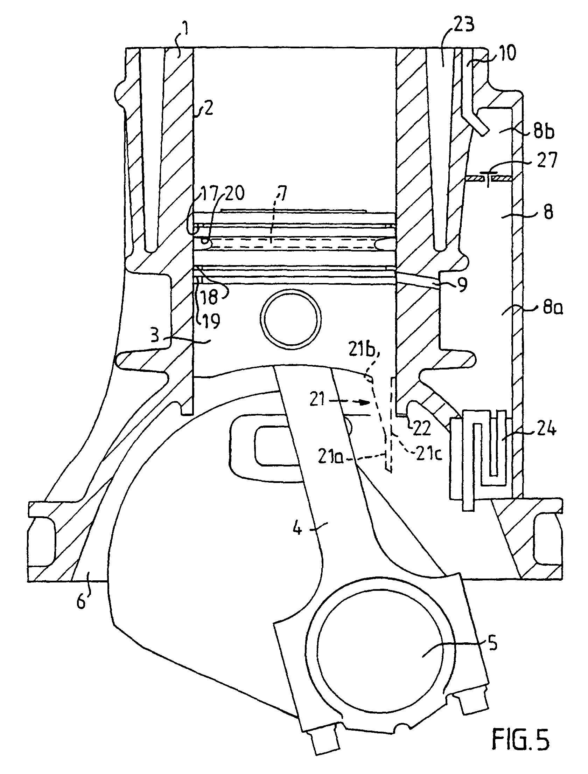

Alternatively, in a third embodiment shown in Fig. 5, the expansion chamber could be divided into a primary 8a and a secondary 8b chamber, where the chambers 8a,8b could be separated by an additional baffle or by placing the check valve 27 between said chambers. Preferably the secondary chamber 8b would be smaller than the primary chamber 8a and would be in direct communication with the evacuation channel 10.

Since the pressure and the flow rate of the blow-by gases in the expansion chamber 8 is lower than in the known evacuation channel mentioned in the introduction, the flow resistance of the blow-by gases is minimized. The low flow rate of the blow-by gases reduces the amount of oil particles reaching the inlet channel 11. Also, the fact that the engine is operated with crankcase underpressure, the water vapour coming out of the collection chamber 20 remains in vapour form and is easily evacuated.

In the embodiments above only one expansion chamber 8 arranged on the outside of the cylinder block 1 is disclosed. However, it is possible to arrange expansion chambers 8 on either side or several on one side of the engine, so that if two expansion chambers are disposed directly on the engine, then at least two expansion chambers 8 are disposed directly on the engine and so that at least two evacuation ports 9 are arranged in each cylinder barrel 2, each port 9 leading to its respective expansion chamber 8. Thus, several evacuation ports 9 can be arranged in each cylinder barrel 2.

In Fig. 6, a perspective view of an engine according to the invention is shown. The expansion chamber 8 is arranged on the outside of the cylinder block 1, so that the outside of the cylinder block 1 constitutes an inner wall of the space, defining the expansion chamber 8. Preferably, the side walls 28 defining the space which constitutes the expansion chamber 8 are integrated with the cylinder block 1. A plate or a cover 29 is arranged hermetically on the side walls 28. The cover 29 can be provided with a heat insulating layer. The expansion chamber 8 is commonly connected to each cylinder barrel 2 via an evacuation port 9 arranged in each cylinder barrel 2. However, the expansion chamber 8 can be divided in compartments, one for each cylinder barrel 2.

## Claims

1. Internal combustion engine, comprising a cylinder block (1) with at least one cylinder barrel (2), a cylinder head (12) with at least one inlet channel (11) and exhaust channel (15) with related inlet and exhaust valves (13, 16) to a combustion chamber (14) situated above a piston (3) moveable in the cylinder barrel (2) and a crank case (6) for lubricating oil situated below the piston (3), wherein the piston (3) has at least two peripheral grooves (17, 18) situated at a distance from each other, each having a piston ring, and a piston collection chamber (20) contained between the rings, **characterized in that** the engine has an expansion chamber (8) commonly connected to each cylinder barrel (2) via an individual evacuation port (9), said port (9) opening out into the respective cylinder barrel (2), the expansion chamber forming a communicating connection between the cylinder barrel (2) and the inlet channel (11) via the evacuation port (9) and an evacuation channel (10), said evacuation channel (10) opening out into at least one inlet channel (11) or inlet manifold, and that the evacuation port (9) and the piston (3) are so adapted to each other that the piston (3) holds the evacuation port open in order to maintain the connection between the crank case (6) and the inlet channel (11) during the piston's (3) movement from its top dead centre to a position at a predetermined distance from the top dead centre and thereafter breaks the connection of the evacuation port (9) with the crank case (6) during its continued movement down to bottom dead centre, and that the collection chamber (20) is connected to the evacuation port (9) when the piston is near the bottom dead centre.

2. Internal combustion engine according to claim 1, **characterized in that** a cyclone tube (25) is arranged into the expansion chamber (8), which causes the blow-by gases to circulate, so that oil particles in the blow-by gases is forced into contact with a surface of the cyclone tube (25) by centrifugal force and thereby separated from the gas.

3. Internal combustion engine according to claim 1 or 2, **characterized in that** the expansion chamber (8) is arranged on the outside of the cylinder block (1), so that the outside of the cylinder block (11) constitutes an inner wall of a space, which defining the expansion chamber (8).

4. Internal combustion engine according to claim 3, **characterized in that** the expansion chamber (8) is divided into a primary (8a) and a secondary (8b) chamber.

5. Internal combustion engine according to claim 4, **characterized in that** the chambers (8a, 8b) are separated by a baffle, which is provided with an aperture for connection between the chambers (8a, 8b).

6. Internal combustion engine according to any of claims 1-5, **characterized in that** two expansion chambers (8) are arranged at the engine and that at least two evacuation ports (9) are arranged in each cylinder barrel (2), each port (9) leading to respective expansion chamber (8).

7. Internal combustion engine according to any of claims 1-6, **characterized in that** each port (9) comprises at least two orifices in order to provide sufficient flow area for the blow-by gases.

8. Internal combustion engine according to any of claims 1-7, **characterized in that** the expansion chamber (8) in its lowermost portion is provided with a vapour separator (24) which connects the expansion chamber (8) with the crank case (6).

9. Internal combustion engine according to any of claims 1-8, **characterized in that** a check valve (27) is arranged in the evacuation channel (10), which check valve (27) prevents the mixture of air and fuel in the inlet channel (11) to enter into the expansion chamber (8).

10. Internal combustion engine according to claim 5, **characterized in that** a check valve (27) is arranged in the aperture.

11. Internal combustion engine according to any of claims 1-10, **characterized in that** the piston (3) has between said piston ring grooves (17,18) a collecting chamber (20) for unburnt fuel-air mixture and combustion gases which pass the upper piston ring, and that the evacuation port (9) is so orientated in relation to said collecting chamber (20) that, after a predetermined movement of the piston (3) from its top and bottom dead centre, respectively, a communicating connection is obtained between the collecting chamber (20) and the inlet channel (11) via the evacuation port (9), expansion chamber (8) and evacuation channel (10).

12. Internal combustion engine according to claim 11, **characterized in that** the collecting chamber (20) is formed of a peripheral groove between the piston ring grooves (17,18).

13. Internal combustion engine according to claim 12, **characterized in that** the peripheral groove (20) is wider and deeper than the piston ring grooves (17, 18).

14. Internal combustion engine according to claim 13, **characterized in that** the width of the peripheral groove (20) is approximately equal to the height of the evacuation port (9).

15. Internal combustion engine according to any of claims 1-14, **characterized in that** the cylinder block ( 1) has cooling jackets (23) for cooling fluid and that the expansion chamber (8) is situated adjacent to a wall of the cooling jacket (23).

## Patentansprüche

1. Verbrennungsmotor, umfassend einen Zylinderblock (1) mit zumindest einer Zylindertrommel (2), einem Zylinderkopf (12) mit zumindest einem Einlasskanal (11) und Auslasskanal (15) mit einer Verbrennungskammer (14) zugeordneten Einlass- und Auslassventilen (13, 16), die oberhalb eines Kolbens (3), der in der Zylindertrommel (2) beweglich ist, angeordnet ist, und einem Kurbelgehäuse (6) für Schmieröl, welches unterhalb des Kolbens (3) angeordnet ist, wobei der Kolben (3) zumindest zwei umfängliche Nuten (17, 18) aufweist, die in einem Abstand zueinander angeordnet sind, wobei jede einen Kolbenring aufweist, sowie eine Kolben-Sammelkammer (20), die zwischen den Ringen enthalten ist, **dadurch gekennzeichnet, dass** der Motor eine Expansions-Kammer (8) aufweist, die auf übliche Weise mit jeder Zylindertrommel (2) über einen individuellen Evakuierungsanschluss (9) verbunden ist, wobei sich diese Anschlusskammer (9) nach außen in die jeweilige Zylindertrommel (2) öffnet, die Expansions-Kammer eine Wirkverbindung zwischen der Zylindertrommel (2) und dem Einlasskanal (11) über den Evakuierungsanschluss (9) und einen Evakuierungs-Kanal (10) ausbildet, wobei der Evakuierungs-Kanal (10) sich in zumindest einen Einlasskanal (11) oder einen Einlass-Verteiler öffnet, und dass der Evakuierungs-Anschluss (9) und der Kolben (3) so aneinander angeordnet sind, dass der Kolben (3) den Evakuierungs-Anschluss offen hält, um die Verbindung zwischen dem Kurbelgehäuse (6) und dem Einlasskanal (11) während der Bewegung des Kolben (3) von dessen oberen Todpunkt zu einer Position bei einer vorab bestimmten Entfernung von dem oberen Todpunkt offen hält und anschließend die Verbindung des Evakuierungs-Anschlusses (9) mit dem Kurbelgehäuse (6) während dessen fortgesetzter Bewegung nach unten auf den unteren Todpunkt hin abbricht, und dass die Sammelkammer (20) mit dem Evakuierungs-Anschluss (9) verbunden ist, wenn der Kolben nahe dem unteren Todpunkt ist.

2. Verbrennungsmotor gemäß Anspruch 1, **dadurch gekennzeichnet, dass** ein Wirbelrohr (25) in der Expansions-Kammer (8) angeordnet ist, welches bewirkt, dass durchblasende Gase zirkuliert werden, so dass Ölpartikel in den durchblasenden Gasen durch Zentrifugalkraft in Kontakt mit einer Oberfläche des Wirbelrohrs (25) gedrängt werden, und dadurch vom Gas getrennt werden.

3. Verbrennungsmotor gemäß Anspruch 1 oder 2, **dadurch gekennzeichnet, dass** die Expansions-Kammer (8) an der Außenseite des Zylinderblocks (1) angeordnet ist, so dass die Außenseite des Zylinderblocks (11) eine innere Wand eines Raums bildet, der die Expansions-Kammer (8) definiert.

4. Verbrennungsmotor gemäß Anspruch 3, **dadurch gekennzeichnet, dass** die Expansions-Kammer (8) in eine Primär-Kammer (8a) und eine Sekundär-Kammer (8b) unterteilt ist.

5. Verbrennungsmotor gemäß Anspruch 4, **dadurch gekennzeichnet, dass** die Kammern (8a, 8b) mittels einer Prallfläche, die zur Verbindung zwischen den Kammern (8a, 8b) mit einer Öffnung versehen ist, abgetrennt sind.

6. Verbrennungsmotor gemäß einem der Ansprüche 1 bis 5, **dadurch gekennzeichnet, dass** zwei Expansions-Kammern (8) an dem Motor angeordnet sind und dass zumindest zwei Evakuierungs-Anschlüsse (9) in jeder Zylindertrommel (2) angeordnet sind, wobei jeder Anschluss (9) zu der jeweiligen Expansions-Kammer (8) führt.

7. Verbrennungsmotor gemäß einem der Ansprüche 1 bis 6, **dadurch gekennzeichnet, dass** jeder Anschluss (9) zumindest zwei Mündungen umfasst, um einen ausreichenden Fließbereich für die durchblasenden Gase zur Verfügung zu stellen.

8. Verbrennungsmotor gemäß einem der Ansprüche 1 bis 7, **dadurch gekennzeichnet, dass** die Expansions-Kammer (8) in ihrem untersten Abschnitt mit einem Dampfseparator (24) versehen ist, der die Expansions-Kammer (8) mit dem Kurbelgehäuse (6) verbindet.

9. Verbrennungsmotor gemäß einem der Ansprüche 1 bis 8, **dadurch gekennzeichnet, dass** ein Absperrventil (27) in dem Evakuierungs-Kanal (10) angeordnet ist, welches die Mischung von Luft und Brennstoff in dem Einlass-Kanal (11) daran hindert, in die Expansions-Kammer (8) einzutreten.

10. Verbrennungsmotor gemäß Anspruch 5, **dadurch gekennzeichnet, dass** ein Absperrventil (27) in der Öffnung angeordnet ist.

11. Verbrennungsmotor gemäß einem der Ansprüche 1 bis 10, **dadurch gekennzeichnet, dass** der Kolben (3) zwischen den Kolbenring-Nuten (17, 18) eine Sammelkammer (20) für unverbrannte Brennstoff-Luft-Mischungen und Verbrennungsgase, die den oberen Kolbenring passieren, aufweist, und dass der Evakuierungs-Anschluss (9) so in Bezug auf die Sammelkammer (20) ausgerichtet ist, dass nach einer vorab bestimmten Bewegung des Kolbens (3) von dessen oberen zu dessen unteren Todpunkt hin eine Wirkverbindung zwischen der Sammelkammer (20) und dem Einlasskanal (11) über den Evakuierungs-Anschluss (9), die Expansions-Kammer (8) und den Evakuierungs-Kanal (10) erhalten wird.

12. Verbrennungsmotor gemäß Anspruch 11, **dadurch gekennzeichnet, dass** die Sammelkammer (20) aus einer umfänglichen Nut zwischen den Kolbenring-Nuten (17, 18) ausgeformt ist.

13. Verbrennungsmotor gemäß Anspruch 12, **dadurch gekennzeichnet, dass** die umfängliche Nut (20) breiter und tiefer als die Kolbenring-Nuten (17, 18) ist.

14. Verbrennungsmotor gemäß Anspruch 13, **dadurch gekennzeichnet, dass** die Breite der umfänglichen Nut (20) nahezu gleich der Höhe des Evakuierungs-Anschlusses (9) ist.

15. Verbrennungsmotor gemäß einem der Ansprüche 1 bis 14, **dadurch gekennzeichnet, dass** der Zylinderblock (1) Kühlmäntel (23) für Kühlflüssigkeit aufweist und dass die Expansions-Kammer (8) nahe einer Wand des Kühlmantels (23) angeordnet ist.

## Revendications

1. Un moteur à combustion interne, comportant un bloc-cylindres (1) comprenant au moins un fût de cylindre (2), une culasse de cylindre (12) comprenant au moins un canal d'admission (11) et un canal d'échappement (15) comprenant des soupapes d'admission et d'échappement (13, 16) reliées à une chambre de combustion (14) située au-dessus d'un piston (3) mobile dans le fût de cylindre (2) et un carter de moteur (6) pour l'huile de lubrification située en dessous du piston (3), dans lequel le piston (3) présente deux rainures périphériques (17, 18) situées à une certaine distance l'une de l'autre, ayant chacune un segment de piston, et une chambre de collection de piston (20) contenue entre les segments, **caractérisé en ce que** le moteur présente une chambre de détente (8) communément connectée à chaque fût de cylindre (2) via une buse individuelle d'évacuation (9), ladite buse (9) débouchant dans le fût de cylindre respectif (2), la chambre de détente formant une connexion communiquant entre le fût de cylindre (2) et le canal d'admission (11) via la buse d'évacuation (9) et un canal d'évacuation (10), ledit canal d'évacuation (10) débouchant dans au moins un canal d'admission (11) ou tubulure d'admission, et **en ce que** la buse d'évacuation (9) et le piston (3) sont adaptés l'un à l'autre de façon à ce que le piston (3) tienne la buse d'évacuation ouverte afin de maintenir la connexion entre le carter de moteur (6) et le canal d'admission (11) pendant le mouvement du piston (3) depuis son point mort supérieur jusqu'à une position située à une distance prédéterminée du point mort supérieur et par la suite rompe la connexion entre la buse d'évacuation (9) et le carter de moteur (6) pendant son mouvement continu de descente vers le point mort inférieur, et **en ce que** la chambre de collection (20) est connectée à la buse d'évacuation (9) lorsque le piston est près du point mort inférieur.

2. Un moteur à combustion interne selon la revendication 1, **caractérisé en ce qu'**un tube cyclone (25) est aménagé dans la chambre de détente (8), ce qui occasionne aux fuites des gaz de circuler, afin que les particules d'huile dans les fuites des gaz soient forcées d'entrer en contact avec une surface du tube cyclone (25) par force centrifuge et soient ainsi séparées des gaz.

3. Un moteur à combustion interne selon la revendication 1 ou 2, **caractérisé en ce que** le chambre de détente (8) est aménagée sur l'extérieur du bloc-cylindres (1) de sorte que l'extérieur du bloc-cylindres (11) constitue une paroi interne d'un espace, qui délimite la chambre de détente (8).

4. Un moteur à combustion interne selon la revendication 3, **caractérisé en ce que** la chambre de détente (8) est divisée en une chambre primaire (8a) et une chambre secondaire (8b).

5. Un moteur à combustion interne selon la revendication 4, **caractérisé en ce que** les chambres (8a, 8b) sont séparées par une chicane, qui est pourvue d'une ouverture pour une connexion entre les chambres (8a, 8b).

6. Un moteur à combustion interne selon l'une quelconque des revendications 1 à 5, **caractérisé en ce que** deux chambres de détente (8) sont aménagées au moteur et **en ce qu'**au moins deux buses d'évacuation (9) sont aménagées dans chaque fût de cylindre (2), chaque buse (9) menant à une chambre de détente (8) respective.

7. Un moteur à combustion interne selon l'une quelconque des revendications 1 à 6, **caractérisé en ce que** chaque buse (9) comporte au moins deux orifices afin de procurer une section d'écoulement suffisant pour les fuites des gaz.

8. Un moteur à combustion interne selon l'une quelconque des revendications 1 à 7, **caractérisé en ce que** la chambra de détente (8) dans sa portion la plus basse est pourvue d'un séparateur de vapeurs (24) qui connecte la chambre de détente (8) avec le carter de moteur (6).

9. Un moteur à combustion interne selon l'une quelconque des revendications 1 à 8, **caractérisé en ce qu'**un clapet de non-retour (27) est aménagé dans le canal d'évacuation (10), lequel clapet de non-retour (27) empêche au mélange d'air et de carburant dans le canal d'admission (11) d'entrer dans la chambre de détente (8).

10. Un moteur à combustion interne selon la revendication 5, **caractérisé en ce qu'**un clapet de non-retour (27) est aménagé dans l'ouverture.

11. Un moteur à combustion interne selon l'une quelconque des revendications 1 à 10, **caractérisé en ce que** le piston (3) présente entre lesdites rainures de segment de piston (17, 18) une chambre collectrice (20) pour le mélange de carburant-air imbrûlé et des gaz de combustion qui passent devant le segment de piston supérieur, et **en ce que** la buse d'évacuation (9) est orientée par rapport aux chambres collectrices (20) afin que, à la suite d'un mouvement prédéterminé du piston (3) depuis ses points morts supérieur et inférieur, respectivement, une connexion communicante soit établie entre la chambre collectrice (20) et le canal d'admission (11) via la buse d'évacuation (9), la chambre de détente (8) et le canal d'évacuation (10).

12. Un moteur à combustion interne selon la revendication 11, **caractérisé en ce que** la chambre collectrice (20) est formée d'une rainure périphérique entre les rainures de segment de piston (17, 18).

13. Un moteur à combustion interne selon la revendication 12, **caractérisé en ce que** la rainure périphérique (20) est plus large et plus profonde que les rainures de segment de piston (17, 18).

14. Un moteur à combustion interne selon la revendication 13, **caractérisé en ce que** la largeur de la rainure périphérique (20) est approximativement égale à la hauteur de la buse d'évacuation (9).

15. Un moteur à combustion interne selon l'une quelconque des revendications 1 à 14, **caractérisé en ce que** le bloc-cylindres (1) présente des chemises de refroidissement (23) pour un liquide de refroidissement et **en ce que** la chambre de détente (8) est située adjacente à une paroi de la chemise de refroidissement (23).
